# EUROPEAN PATENT SPECIFICATION

(11) **EP 4 011 751 B1**
(45) Date of publication and mention of the grant of the patent: **14.02.2024**
(21) Application number: 20866336.9
(22) Date of filing: 17.09.2020
(51) Int. Cl.: B62D 21/15, B62D 25/08, B62D 25/14, B62D 25/20

(54) **FRONT VEHICLE BODY STRUCTURE AND VEHICLE**
FAHRZEUGFRONTKAROSSERIESTRUKTUR UND FAHRZEUG
STRUCTURE DE CARROSSERIE DE VÉHICULE AVANT ET VÉHICULE

(30) Priority: 19.09.2019 CN 201910886535
(43) Date of publication of application: 15.06.2022
(73) Proprietor: Great Wall Motor Company Limited, Baoding, Hebei 071000 (CN)
(72) Inventor: WANG, Changyi, Baoding, Hebei 071000 (CN); LI, Weiwei, Baoding, Hebei 071000 (CN); HAN, Erhong, Baoding, Hebei 071000 (CN); HUANG, Chuangju, Baoding, Hebei 071000 (CN); AN, Jing, Baoding, Hebei 071000 (CN); DUAN, Rui, Baoding, Hebei 071000 (CN); MIAO, Kexin, Baoding, Hebei 071000 (CN); SHAO, Bei, Baoding, Hebei 071000 (CN); MEI, Lisheng, Baoding, Hebei 071000 (CN); YANG, Guangnan, Baoding, Hebei 071000 (CN); LI, Haoxuan, Baoding, Hebei 071000 (CN); LIU, Yangang, Baoding, Hebei 071000 (CN)
(74) Representative: Klunker IP Patentanwälte PartG mbB
(86) International application number: PCT/CN2020/115868
(87) International publication number: WO 2021/052411

(56) References cited:
- EP-A1- 3 118 088
- WO-A1-2013/156732
- WO-A1-2018/177396
- CN-A- 109 204 460
- CN-A- 111 619 670
- CN-U- 205 203 123
- DE-A1-102016 005 264
- JP-A- 2002 370 672
- JP-A- 2010 241 261
- US-A1- 2013 088 045
- US-A1- 2013 341 969
- US-A1- 2018 201 326

## Description

The present application claims priority to the Chinese patent application No. 201910886535.6 filed to the China Patent Office on September 19, 2019, and entitled "Front vehicle body structure and vehicle".

### TECHNICAL FIELD

The invention belongs to the technical field of vehicle body structures, and particularly relates to a front vehicle body structure and a vehicle.

### BACKGROUND

In frontal collision, an engine compartment of the vehicle can be crushed and deformed, so that a dash panel of a vehicle body deforms backwards to compress a passenger compartment, the safety of passengers is seriously threatened, and the strength and the force transmission capacity of the dash panel are extremely important.

US 2013/0341969 A1 discloses a vehicle body floor structure according to the preamble of claim 1.

WO 2018/177396 A1 discloses a vehicle body comprising first supports, front longitudinal floor beams and doorsill beams, wherein by arranging all these components a force can be efficiently and quickly absorbed and decomposed, and a collision force transferred backwards can be effectively dispersed, thus being capable of preventing the vehicle body from being seriously damaged.

JP 2010 241261 A discloses a vehicle body frame structure for efficiently transmitting and absorbing a collision load input to a front side frame by a frontal collision to a side sill offset with respect to the front side frame.

US 2018/201326 A1 discloses a front cabin frame assembly includes a front beam front section, an upper side beam, a cowl reinforcement crossbeam, a cowl outer reinforcement and an A-pillar.

In the front vehicle body structure, the connecting section of the bottom of the dash panel and the front floor is the weakest. In general, a floor longitudinal beam penetrating through a front floor and a rear floor is additionally arranged in the middle of the bottom of a vehicle body of a traditional fuel vehicle type so as to improve the force transmission capacity. A battery needs to be arranged at the bottom of a new energy vehicle type (electric vehicle), and the above similar design cannot be realized, so that the new energy vehicle has the risk that a passenger compartment is seriously deformed during frontal collision due to insufficient force transmission capacity.

### SUMMARY

The invention aims to provide a front vehicle body structure, and aims to solve the technical problem that a passenger compartment is easy to deform severely in frontal collision due to insufficient force transmission capacity of a front vehicle body structure of an existing new energy vehicle.

In order to achieve the purpose, a front vehicle body structure and a vehicle according to the independent claims are provided. Further embodiments are specified in the dependent claims.

The technical solution adopted by the invention is that the front vehicle body structure is provided and includes a front longitudinal beam, a dash panel, a front floor and a side longitudinal beam connected to the front floor; wherein,

the dash panel is used for separating a vehicle room from an engine room, and the lower end of the dash panel is provided with a rear edge portion which extends towards the rear of a vehicle body and is connected to the front floor;

the front longitudinal beam includes a longitudinal beam front section and a longitudinal beam rear section connected to the longitudinal beam front section; the longitudinal beam front section extends along a front-back direction of the vehicle body, and the longitudinal beam front section is arranged on the front side of the dash panel and connected to the dash panel; the longitudinal beam rear section extends along the front-back direction of the vehicle body and at least extends to the lower side of the rear edge portion, and the longitudinal beam rear section is connected to a lower panel face of the rear edge portion; and

the side longitudinal beam is arranged on the side, in the width direction of the vehicle body, of the front floor and separately connected to the dash panel and the longitudinal beam rear section, so that the side longitudinal beams, the dash panel and the longitudinal beam rear sections form a force transmission closed-loop structure.

According to the invention, the front vehicle body structure further includes a cowl cross beam, the cowl cross beam extends in the width direction of the vehicle body and is connected to the dash panel, and the cowl cross beam includes a cross beam top plate, two cross beam bottom plates and two cross beam vertical plates used for separately being connected to the cross beam top plate and the cross beam bottom plates; and the two cross beam bottom plates are respectively connected to the dash panel in a lap joint mode.

As another embodiment of the invention, the cowl cross beam is located on the front side of the dash panel, and the longitudinal beam front section is further connected to the cowl cross beam.

According to the invention, the front vehicle body structure further includes a middle channel which protrudes upwards and extends along the front-back direction of the vehicle body, and the middle channel is provided with a middle channel lap joint portion which is separately connected to an upper panel face of the rear edge portion and an upper floor face of the front floor in a lap joint mode.

According to the invention, the front vehicle body structure further includes a first reinforcing piece which is arranged on the middle channel and connected to the middle channel, and the first reinforcing piece is further provided with a first lap joint portion which is connected to the dash panel in a lap joint mode; the projection area of the first lap joint portion projected on the dash panel coincides with or partially coincides with the projection area of the cross beam bottom plate projected on the dash panel.

As another embodiment of the invention, the front vehicle body structure further includes a second reinforcing piece used for connecting the longitudinal beam rear section and the side longitudinal beam, and the second reinforcing piece is located on the lower side of the rear edge portion and connected to the lower panel face of the rear edge portion.

As another embodiment of the invention, the second reinforcing piece includes a first sub-plate extending along the front-back direction of the vehicle body and a second sub-plate extending along the width direction of the vehicle body, the first sub-plate is connected to the second sub-plate, and the first sub-plate and the second sub-plate are separately connected to the lower panel surface of the rear edge portion, and the second sub-plate is used for connecting the longitudinal beam rear section and the side longitudinal beam.

As another embodiment of the invention, the first sub-plate is provided with a second lap joint portion connected to the lower panel face of the rear edge portion in a lap joint mode, and the projection area, projected on the rear edge portion, of the middle channel lap joint portion coincides with or partially coincides with the projection area, projected on the rear edge portion, of the second lap joint portion.

As another embodiment of the invention, the first sub-plate is provided with a third lap joint portion connected to the lower floor face of the front floor in a lap joint mode, and the projection area, projected on the front floor, of the middle channel lap joint portion coincides with or partially coincides with the projection area, projected on the front floor, of the third lap joint portion.

As another embodiment of the invention, the front vehicle body structure further includes a dash panel supporting plate, and the side longitudinal beams are connected to the dash panel through the dash panel supporting plate.

The other purpose of the invention is to provide a vehicle which includes the front vehicle body structure.

Compared with the prior art, according to the front vehicle body structure provided by the invention, the longitudinal beam rear sections of the front longitudinal beam and the dash panel are respectively connected to the side longitudinal beam, so that the side longitudinal beam, the dash panel and the longitudinal beam rear section form a force transmission closed-loop structure, the collision force of the front longitudinal beam is dispersed and transmitted to the side longitudinal beam, and the force transmission effect of a vehicle body is effectively improved; the stress at the joint of the rear edge portion and the front floor is reduced, and the structural reliability of the vehicle body is improved.

The description is only the summary of the technical solution of the invention, the description can be implemented according to the content of the specification in order to more clearly understand the technical means of the invention, and the specific implementation mode of the invention is provided in order to make the above and other purposes, characteristics and advantages of the invention more obvious and easy to understand.

### BRIEF DESCRIPTION OF THE DRAWINGS

The embodiment of the invention is depicted in the following drawings:
Fig. 1 schematically shows a first schematic diagram of the front vehicle body structure provided by the embodiment of the invention;
Fig. 2 schematically shows a second schematic diagram of the front vehicle body structure provided by the embodiment of the invention;
Fig. 3 schematically shows a third schematic diagram (from a vehicle bottom view angle) of the front vehicle body structure provided by the embodiment of the invention;
Fig. 4 schematically shows a fourth schematic diagram (from a vehicle roof view angle) of the front vehicle body structure provided by the embodiment of the invention;
Fig. 5 schematically shows a schematic diagram in Fig. 4 after the dash panel and the front floor are removed;
Fig. 6 schematically shows a matching schematic diagram of the dash panel, the middle channel and the first reinforcing piece in Fig. 2;
Fig. 7 schematically shows a section view of A in Fig. 4;
Fig. 8 schematically shows a section view of B in Fig. 4;
Fig. 9 schematically shows a section view of C in Fig. 4;
Fig. 10 schematically shows an enlarged view at D in Fig. 7;
Fig. 11 schematically shows an enlarged view at E in Fig. 8; and
Fig. 12 schematically shows an enlarged view at F in Fig. 9.

In the drawings, 100, front longitudinal beam; 110, longitudinal beam front section; 120, longitudinal beam rear section; 200, dash panel; 210, rear edge portion; 300, front floor; 400, side longitudinal beam; 500, cowl cross beam; 510, cross beam top plate; 520, cross beam bottom plate; 530, cross beam vertical plate; 540, cowl cross beam reinforcing plate; 600, middle channel; 610, middle channel lap joint portion; 620, first reinforcing piece; 621, first lap joint portion; 700, second reinforcing piece; 710, first sub-plate; 711, second lap joint portion; 712, third lap joint portion; 720, second sub-plate; 800, dash panel supporting plate.

### DETAILED DESCRIPTION

In order to make the technical problems to be solved, the technical solution and the beneficial effects clearer, the invention is further explained in detail in combination with the attached drawings and the embodiments. It should be understood that the specific embodiments described herein are only used to interpret the present invention and not to define the present invention. The invention is solely defined by the appended claims.

It needs to be explained that the directional or positional relationship indicated by terms such as length, width, height, thickness, top, bottom, front, back, left, right, vertical, horizontal, top, bottom, inner, outer, head, tail and the like is based on a directional or positional relationship shown as the accompanying drawings and is merely intended to facilitate describing the present invention and simplifying the description, rather than to indicate or imply that the referred device or element has to be located in a specific direction or constructed and operated in the specific direction so as not to be understood as a restriction on the present invention.

It needs to be explained that the terms such as "mounted", "connected", "connection", "fixed", "setting" and the like should be understood in a broad sense unless otherwise specified and defined, for example, "connection" may be fixed connection or detachable connection or integrated connection, may be mechanical connection or electrical connection, may be direct connection or indirect connection through an intermediate medium, and may be internal connection or interactive relationship of two elements. For those of ordinary skilled in the art, the specific meanings of the above terms in the present invention may be understood according to specific situations.

Further, terms "first", "second" are only used to describe purposes, but not understood to indicate or suggest relative importance or implicitly indicate the number of technical features indicated. Thereby, features defined with "first" and "second" may clearly or implicitly include one or more of the features. In addition, the meanings of "multiple" and "several" are two or more than two, unless the meanings are clearly and specifically limited.

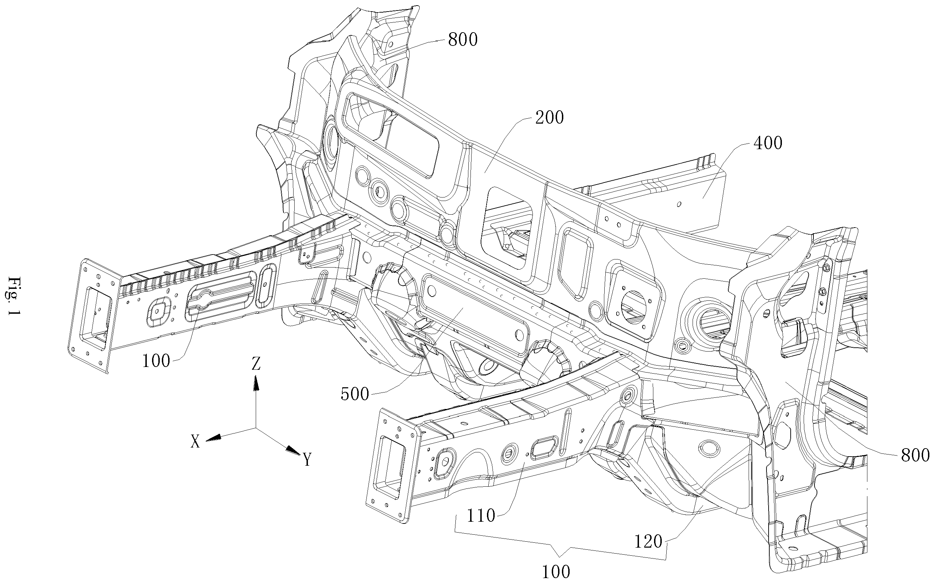

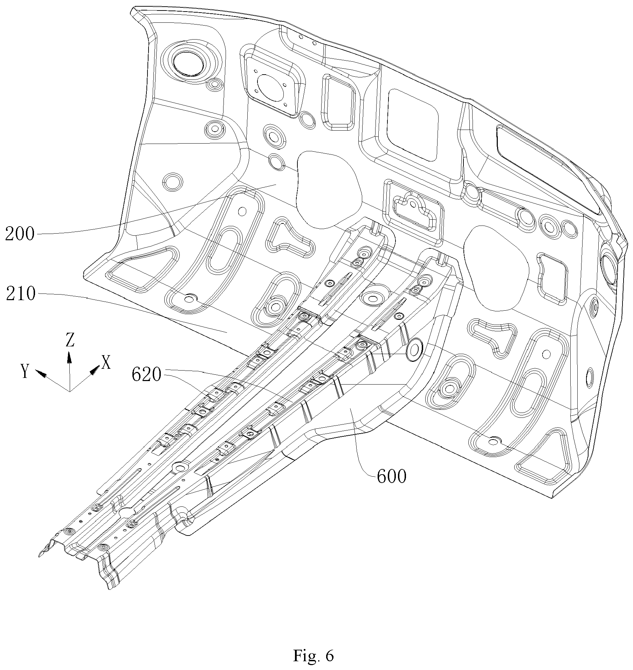

Fig. 1 to Fig. 6 relate to the front vehicle body structure provided by the embodiment of the invention, for convenience of explanation, the positive direction of X defined in the Figures corresponds to the X direction of the whole vehicle, the positive direction of Y corresponds to the Y direction of the whole vehicle, the positive direction of Z corresponds to the Z direction of the whole vehicle, the X direction of the whole vehicle is the front direction of a driver sitting in the vehicle, the Y direction of the whole vehicle is the left side direction of the driver sitting in the vehicle, and the Z direction of the whole vehicle is the direction above the driver sitting in the vehicle.

Referring to Fig. 1 to Fig. 5, an embodiment of the front vehicle body structure provided by the invention is explained now. The front vehicle body structure includes front longitudinal beams 100, a dash panel 200, a front floor 300 and side longitudinal beams 400 connected to the front floor 300.

Wherein the dash panel 200 is used for separating a vehicle room and an engine room, the lower end of the dash panel 200 is provided with a rear edge portion 210 extending towards the rear portion of a vehicle body (namely the negative X direction of the whole vehicle), and the rear edge portion 210 extending backwards is connected to a front floor 300 arranged at the rear portion of the vehicle body of the dash panel 200.

The front longitudinal beam 100 includes a longitudinal beam front section 110 and a longitudinal beam rear section 120 connected to the longitudinal beam front section 110. The longitudinal beam front section 110 extends in the front-back direction of the vehicle body, and the longitudinal beam front section 110 is arranged on the front side of the dash panel 200 (namely the X direction of the whole vehicle) and connected to the dash panel 200. The longitudinal beam rear section 120 also extends in the front-rear direction of the vehicle body and at least extends to the lower side of the rear edge portion 210, and the longitudinal beam rear section 120 is connected to the lower panel surface of the rear edge portion 210. It should be understood here that the longitudinal beam rear section 120 does not necessarily extend only to the lower side of the rear edge portion 210 and does not extend any longer, which may also continue to extend to the lower side of the front floor 300 and may be connected to the lower panel surface of the rear edge portion 210.

The side longitudinal beam 400 is arranged on one side of the front floor 300 along the width direction of the vehicle body (namely the Y direction or the negative Y direction of the whole vehicle), and the side longitudinal beam 400 is respectively connected to the dash panel 200 and the longitudinal beam rear section 120, so that the side longitudinal beams 400, the dash panel 200 and the longitudinal beam rear sections 120 form a force transmission closed-loop structure. It should be noted that the side longitudinal beam 400 is connected to the dash panel 200, that is, the side longitudinal beam 400 is possibly directly connected to the dash panel 200 or indirectly connected to the dash panel 200 by means of a certain component; similarly, the side longitudinal beam 400 is connected to the longitudinal beam rear section 120, that is, the side longitudinal beam 400 is possibly directly connected to the longitudinal beam rear section 120 and is also possibly indirectly connected to the longitudinal beam rear section 120 by means of a certain component. Therefore, the collision force of the front longitudinal beam 100 can be dispersed and transmitted through the dash panel 200 (the longitudinal beam front section 110) and the longitudinal beam rear section 120, and then the force is transmitted to the side longitudinal beam 400 through the dash panel 200 and the longitudinal beam rear section 120, so that the force transmission effect of the front portion of a vehicle body can be effectively improved, and on the other hand, the structural reliability of the vehicle body can be improved.

Particularly, in frontal collision of the vehicle, the front longitudinal beam 100 is subjected to acting force in the front-back direction of a vehicle body; one force transmission channel is that the longitudinal beam front section 110 transmits acting force to the dash panel 200, the dash panel 200 transmits the acting force to the side longitudinal beam 400 (on the other hand, the rear edge portion 210 transmits portion of the acting force to the front floor 300); meanwhile, the other force transmission channel is that the longitudinal beam rear section 120 transmits the acting force to the side longitudinal beam 400, so that a force transmission closed-loop structure is formed without arranging a floor longitudinal beam in the prior art, a large portion of stress of the front longitudinal beam 100 is transmitted to the side longitudinal beam 400, and the stress at the joint of the weak rear edge portion 210 and the front floor 300 is greatly reduced.

Besides, in the structure, the extension length of the longitudinal beam rear section 120 can be set to be short (not penetrating through the front floor and the rear floor), and the longitudinal beam rear section 120 can also not be arranged in the middle of the vehicle body, so that excessive space on the bottom side of the vehicle body is not occupied, and enough space is reserved for a battery of the new energy vehicle.

Compared with the prior art, according to the front vehicle body structure provided by the embodiment of the invention, the longitudinal beam rear section of the front longitudinal beam and the dash panel are respectively connected to the side longitudinal beam, so that the side longitudinal beams, the dash panel and the longitudinal beam rear sections form a force transmission closed-loop structure, the collision force of the front longitudinal beam is dispersed and transmitted to the side longitudinal beam, and the force transmission effect of the vehicle body is effectively improved; the stress at the joint of the rear edge portion and the front floor is reduced, and the structural reliability of the vehicle body is improved.

Referring to Fig. 1, as a specific implementation mode of the front vehicle body structure provided by the invention, the arrangement height of the longitudinal beam front section 110 is higher than that of the front floor 300, so that the longitudinal beam front section 110 and the dash panel 200 can better transmit force through a force transmission channel, and the stress at the j oint of the front floor 300 and the rear edge portion 210 is reduced as much as possible.

Referring to Fig. 1 to Fig. 5, as one specific implementation mode of the front vehicle body structure provided by the invention, the number of the front longitudinal beams 100 is two, the number of the side longitudinal beams 400 is two, the front longitudinal beams 100 are arranged at intervals in the width direction of a vehicle body, the two side longitudinal beams 400 are arranged on the two sides of a front floor 300 in the width direction of the vehicle body respectively, and the front longitudinal beams 100 correspond to the side longitudinal beams 400 in a one-to-one mode, and the front longitudinal beam 100 and the corresponding side longitudinal beam 400 form a force transmission channel.

Referring to Fig. 1 to Fig. 5, as a specific implementation mode of the front vehicle body structure provided by the invention, two front floors 300 are also arranged, are connected to each other and are respectively connected to the corresponding longitudinal beam front sections 110, side longitudinal beams 400 and rear edge portions 210.

Referring to Fig. 1, Fig. 4 and Fig. 7, the front vehicle body structure according to the invention further includes a cowl cross beam 500, and the cowl cross beam 500 extends in the width direction of the vehicle body and is connected to the dash panel 200.

The cowl cross beam 500 includes a cross beam top plate 510, two cross beam bottom plates 520 and two cross beam vertical plates 530 used for being connected to the cross beam top plate 510 and the cross beam bottom plates 520 respectively. Thus, the cowl cross beam 500 is of a structure similar to an JL-shape or a Q-shape, the cowl cross beam 500 and the dash panel 200 form a closed section structure, the rigidity of the dash panel 200 can be greatly improved, particularly the transverse rigidity of the dash panel 200 is improved, and meanwhile the torsional rigidity of the dash panel 200 is improved. The two cross beam bottom plates 520 are respectively connected to the dash panel 200 in a lap joint mode.

Referring to Fig. 1, Fig. 4 and Fig. 7, as a specific embodiment of the front vehicle body structure provided by the invention, the cowl cross beam 500 is positioned on the front side of the vehicle body of the dash panel 200.

Referring to Fig. 1, as a specific implementation mode of the front vehicle body structure provided by the invention, the longitudinal beam front section 110 is connected to the cowl cross beam 500 besides the dash panel 200, so that the cowl cross beam 500 is high in rigidity and also bears portion of the acting force of the longitudinal beam front section 110, the direct acting force borne by the dash panel 200 from the longitudinal beam front section 110 is reduced, and the dash panel 200 is effectively prevented from being easily damaged.

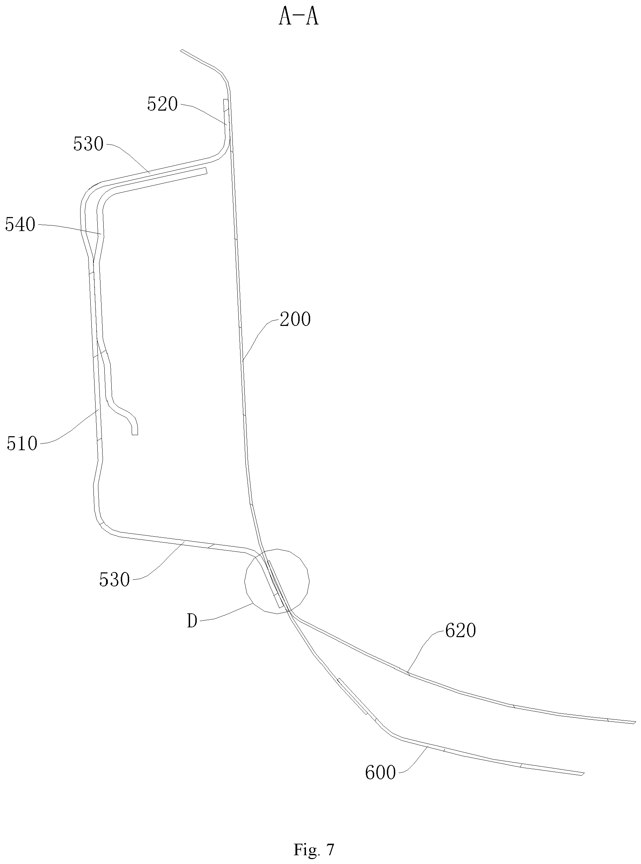

Referring to Fig. 7, as a specific implementation mode of the front vehicle body structure provided by the invention, the front vehicle body structure provided by the embodiment of the invention further includes a cowl cross beam reinforcing plate 540 arranged in the cowl cross beam 500, and the cowl cross beam reinforcing plate 540 is connected to the cowl cross beam 500 and is used for further reinforcing the rigidity of the cowl cross beam 500 and the dash panel 200.

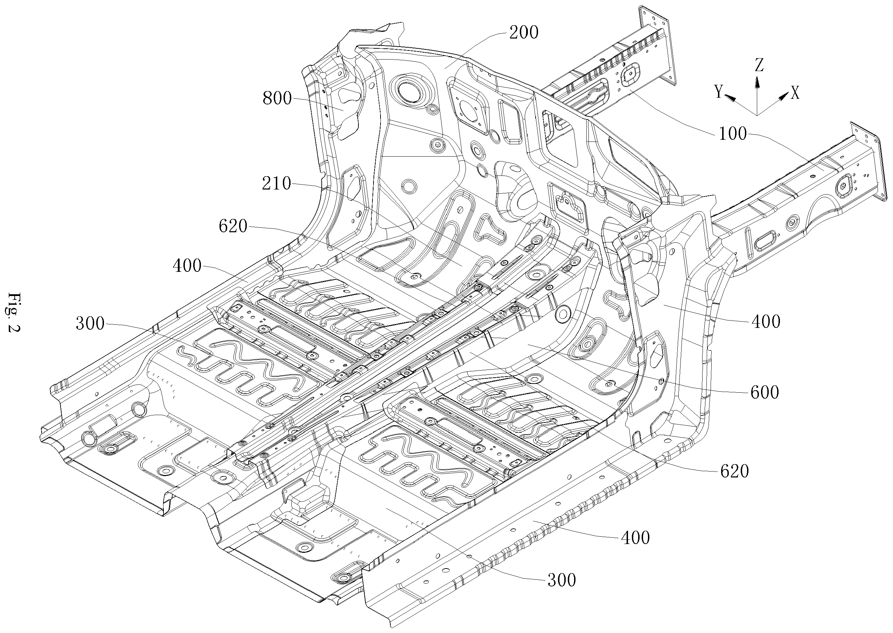

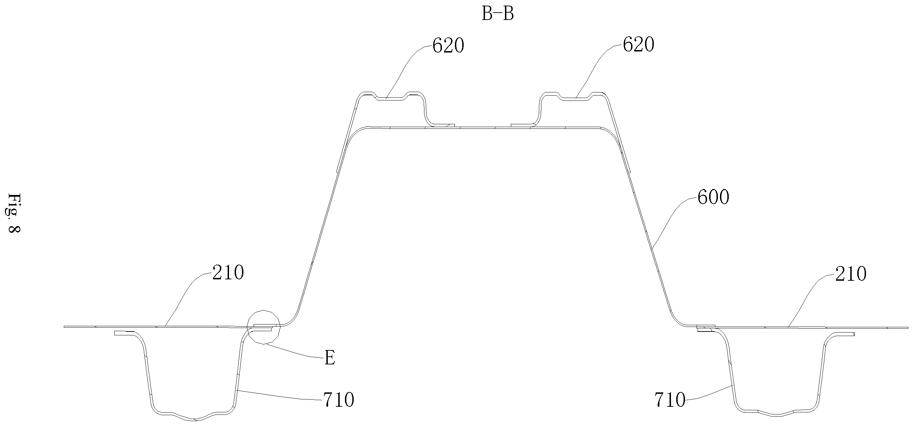

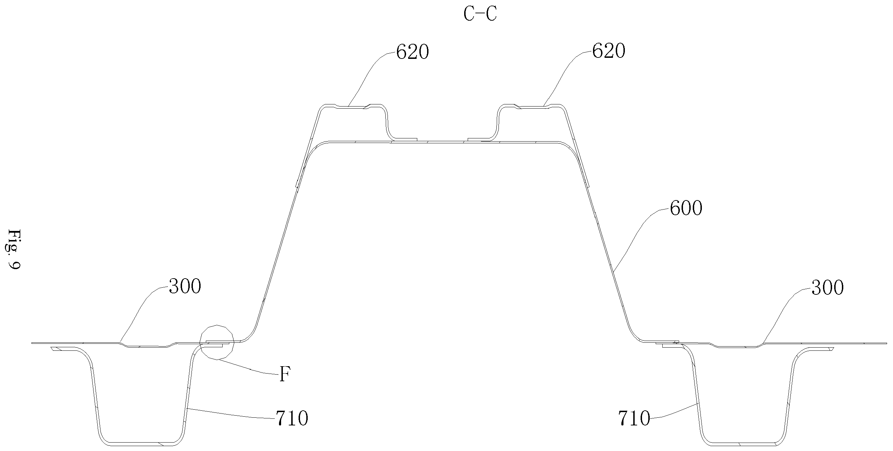

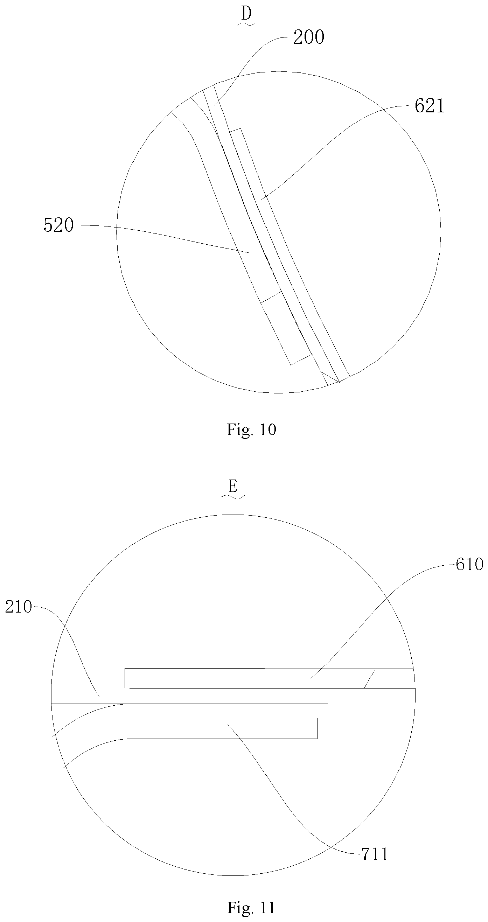

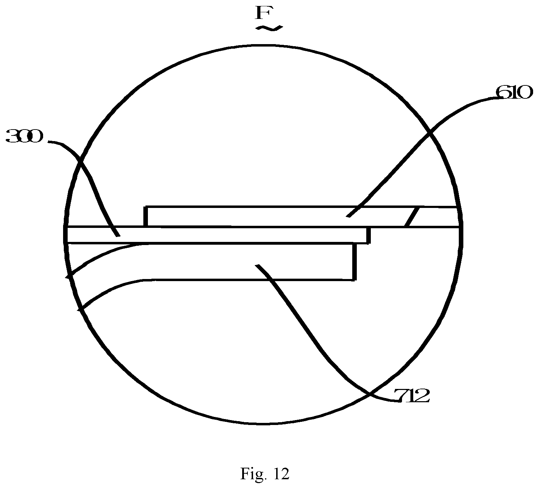

Referring to Fig. 2 to Fig. 6 and Fig. 7 to Fig. 12, the front vehicle body structure according to the invention further includes a middle channel 600 which protrudes upwards and extends in the front-back direction of the vehicle body, and on one hand, the middle channel 600 can improve the longitudinal rigidity of the rear edge portion 210 and the front floor 300 (namely the front-back direction of the vehicle body), and on the other hand, a certain containing space can be provided for the bottom of the vehicle body. The middle channel 600 is arranged on the upper portion of the rear edge portion 210 and the front floor 300 and is approximately arranged in the middle of the upper portion of the rear edge portion 210 and the front floor 300.

The middle channel 600 is of an upward protruding structure and is further provided with a middle channel lap joint portion 610 which is respectively connected to the upper panel face of the rear edge portion 210 and the upper floor face of the front floor 300 in a lap joint mode.

As a specific implementation mode of the front vehicle body structure provided by the invention, the middle channel 600 is a stamping plate body with an upward protruding structure, and the middle channel lap joint portion 610 is of a flanging structure.

As a specific implementation mode of the front vehicle body structure provided by the invention, a notch is formed in the position, corresponding to the middle channel 600, of the rear edge portion 210 and/or the front floor 300, so that the middle channel 600 forms a containing space.

Referring to Fig. 2 and Fig. 4 to Fig. 12, the front vehicle body structure according to the invention further includes a first reinforcing piece 620 which is arranged on the middle channel 600 and is connected to the middle channel 600, and the structure of the first reinforcing piece 620 is not limited; the main body structure can be an JL-shaped steel structure, a plate body structure, a channel steel structure or an angle steel structure and the like capable of enhancing the rigidity of the middle channel 600.

In order to enhance the rigidity of the dash panel 200, the first reinforcing piece 620 is further connected to the dash panel 200, and the first reinforcing piece 620 is provided with a first lap joint portion 621 connected to the dash panel 200 in a lap joint mode. The projection area of the first lap joint portion 621 projected on the dash panel 200 coincides with or partially coincides with the projection area of the cross beam bottom plate 520 projected on the dash panel 200, that is, the first lap joint portion 621 and the cross beam bottom plate 520 are located on the two sides of the dash panel 200 respectively, but the lap joint area of the first lap joint portion 621 on the dash panel 200 and the lap joint area of the cross beam bottom plate 520 on the dash panel 200 correspondingly coincide or partially coincide, so that the torsional rigidity and the bending strength of a vehicle body are improved, meanwhile, collision stress can be more efficiently transmitted to the rear portion of the vehicle, deformation of a cab is restrained, and the living space of passengers is guaranteed.

As a specific implementation mode of the front vehicle body structure provided by the invention, the first reinforcing piece 620 is a stamping plate body with an upward protruding structure, and the first lap joint portion 621 is a flanging structure on the plate body.

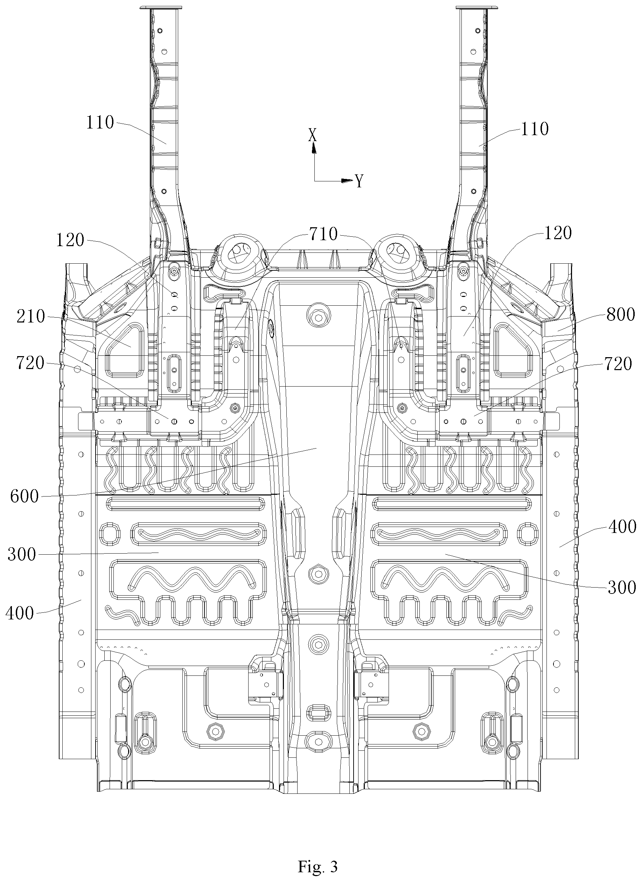

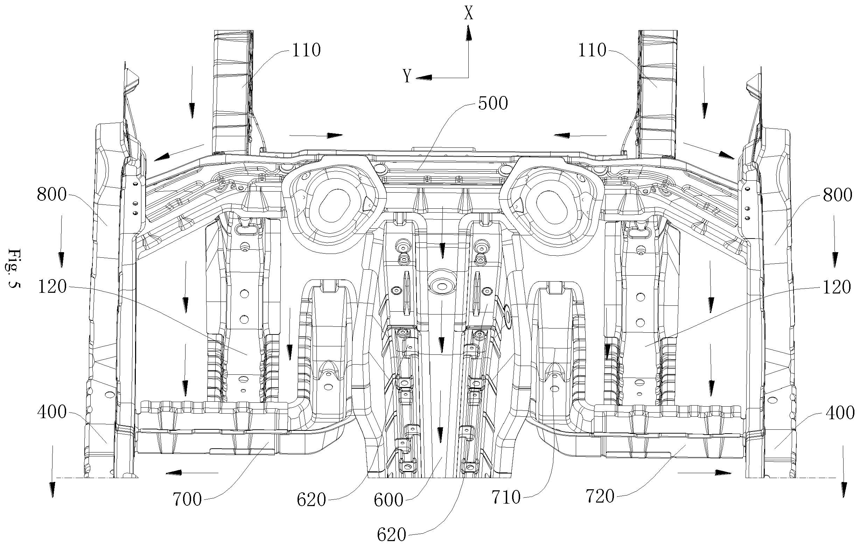

Referring to Fig. 3 and Fig. 5, as a specific implementation mode of the front vehicle body structure provided by the invention, the front vehicle body structure provided by the embodiment of the invention further includes a second reinforcing piece 700 for connecting the longitudinal beam rear section 120 and the side longitudinal beam 400, that is, the longitudinal beam rear section 120 and the side longitudinal beam 400 are not directly connected but are connected through the second reinforcing piece 700. The longitudinal beam rear section 120 transmits the acting force to the second reinforcing piece 700, and then the second reinforcing piece 700 transmits the acting force to the side longitudinal beam 400. The second reinforcing piece 700 is of an unlimited structure, can be of a reinforcing structure such as a plate body structure or a beam structure and is located on the lower side of the rear edge portion 210 and connected to the lower panel face of the rear edge portion 210. The longitudinal beam rear section 120 and the side longitudinal beam 400 can be respectively constructed into a linear structure which is almost parallel to the X direction of the whole vehicle, and a second reinforcing piece 700 is additionally arranged, so that connection and acting force transmission of the longitudinal beam rear section 120 and the side longitudinal beam 400 are facilitated.

Referring to Fig. 3 and Fig. 5, as one specific implementation mode of the front vehicle body structure provided by the invention, the second reinforcing piece 700 includes a first sub-plate 710 extending in the front-back direction of the vehicle body and a second sub-plate 720 extending in the width direction of the vehicle body, the first sub-plate 710 is connected to the second sub-plate 720, the first sub-plate 710 and the second sub-plate 720 are respectively further connected to the lower panel face of the rear edge portion 210, the second sub-plate 720 is used for connecting the longitudinal beam rear section 120 and the side longitudinal beam 400. Thus, the second reinforcing piece 700 is of an L-shaped structure, the first sub-plate 710 is connected to the lower panel face of the rear edge portion 210, the acting force borne by the rear edge portion 210 can be shared, and the stress at the joint of the rear edge portion 210 and the front floor 300 is reduced.

Referring to Fig. 3 and Fig. 5, as a specific implementation mode of the front vehicle body structure provided by the invention, the second sub-plate 720 is respectively and vertically arranged and connected to the longitudinal beam rear section 120 and the side longitudinal beam 400, and the end portion of the second sub-plate 720 is directly connected to the side longitudinal beam 400.

Referring to Fig. 3 and Fig. 5, as a specific implementation mode of the front vehicle body structure provided by the invention, the number of the second reinforcing pieces 700 is two, and the second reinforcing pieces 700 are in one-to-one correspondence with the side longitudinal beams 400 and the longitudinal beam rear sections 120 respectively.

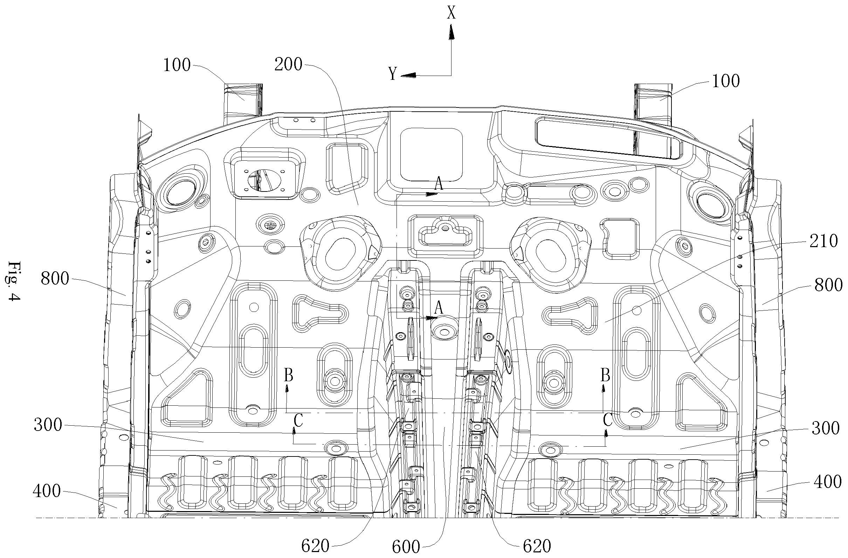

Referring to Fig. 4, Fig. 8 and Fig. 11, as a specific implementation mode of the front vehicle body structure provided by the invention, the first sub-plate 710 is provided with a second lap joint portion 711 which is in lap joint with the lower panel surface of the rear edge portion 210. The projection area of the middle channel lap joint portion 610 projected on the rear edge portion 210 coincides with or partially coincides with the projection area of the second lap joint portion 711 projected on the rear edge portion 210, that is, the middle channel lap joint portion 610 and the second lap joint portion 711 are located on the two sides of the rear edge portion 210 respectively, but the lap joint area of the middle channel lap joint portion 610 on the rear edge portion 210 and the lap joint area of the second lap joint portion 711 on the rear edge portion 210 correspondingly coincide or partially coincide, so that the torsional rigidity and the bending strength of a vehicle body are improved, meanwhile, the rigidity of the connecting portion of the rear edge portion 210 and the front floor 300 can be improved, the structural strength is improved, the force transmission path is increased, and the collision force transmission efficiency is improved.

Referring to Fig. 4, Fig. 9 and Fig. 12, as a specific implementation mode of the front vehicle body structure provided by the invention, the first sub-plate 710 is provided with a third lap joint portion 712 which is in lap joint with the lower floor surface of the front floor 300. The projection area, projected on the front floor 300, of the middle channel lap joint portion 610 coincides with or partially coincides with the projection area, projected on the front floor 300, of the third lap joint portion 712, that is, the middle channel lap joint portion 610 and the third lap joint portion 712 are located on the two sides of the front floor 300 respectively, but the lap joint area of the middle channel lap joint portion 610 on the front floor 300 and the lap joint area of the third lap joint portion 712 on the front floor 300 correspondingly coincide or partially coincide, so that the torsional rigidity and the bending strength of a vehicle body are improved, meanwhile, the rigidity of the connecting portion of the rear edge portion 210 and the front floor 300 can be improved, the structural strength is improved, the force transmission path is increased, and the collision force transmission efficiency is improved.

As a specific implementation mode of the front vehicle body structure provided by the invention, the second lap joint portion 711 and the third lap joint portion 712 can be different portions of the same flange on the first sub-plate 710 and can also be different flanges of the first sub-plate 710.

Referring to Fig. 1 to Fig. 5, as a specific implementation mode of the front vehicle body structure provided by the invention, the front vehicle body structure provided by the embodiment of the invention further includes a dash panel supporting plate 800, and the side longitudinal beam 400 is connected to the dash panel 200 through the dash panel supporting plate 800. Due to the design, a gap may be formed between the dash panel 200 and the side longitudinal beam 400, so that the dash panel supporting plate 800 is designed to serve as a medium to connect the dash panel 200 and the side longitudinal beam 400 and serve as a medium to transmit the acting force between the dash panel 200 and the side longitudinal beam 400.

Referring to Fig. 1 to Fig. 5, as one specific implementation mode of the front vehicle body structure provided by the invention, the number of the dash panel supporting plates 800 is two, and the dash panel supporting plates 800 correspond to the side longitudinal beams 400 in a one-to-one mode so as to connect the corresponding side longitudinal beams 400 and the dash panel 200.

The invention further provides a vehicle which includes the front vehicle body structure in the embodiment.

Compared with the prior art, according to the vehicle provided by the embodiment of the invention, the longitudinal beam rear section of the front longitudinal beam and the dash panel are respectively connected to the side longitudinal beam, so that the side longitudinal beams, the dash panel and the longitudinal beam rear sections form a force transmission closed-loop structure, the collision force of the front longitudinal beam is dispersed and transmitted to the side longitudinal beam, and the force transmission effect of a vehicle body is effectively improved; the stress at the joint of the rear edge portion and the front floor is reduced, and the structural reliability of the vehicle body is improved.

## Claims

1. Front vehicle body structure, wherein comprising a front longitudinal beam (100), a dash panel (200), a front floor (300) and a side longitudinal beam (400) connected to the front floor (300); wherein,
the dash panel (200) is used for separating a vehicle room from an engine room, and the lower end of the dash panel (200) is provided with a rear edge portion (210) which extends towards the rear of a vehicle body and is connected to the front floor (300);
the front longitudinal beam (100) comprises a longitudinal beam front section (110) and a longitudinal beam rear section (120) connected to the longitudinal beam front section (110); the longitudinal beam front section (110) extends along a front-back direction of the vehicle body, and the longitudinal beam front section (110) is arranged on the front side of the dash panel (200) and connected to the dash panel (200); the longitudinal beam rear section (120) extends along the front-back direction of the vehicle body and at least extends to the lower side of the rear edge portion (210), and the longitudinal beam rear section (120) is connected to a lower panel face of the rear edge portion (210); and
the side longitudinal beam (400) is arranged on the side, in the width direction of the vehicle body, of the front floor (300) and separately connected to the dash panel (200) and the longitudinal beam rear section (120), so that the side longitudinal beam (400), the dash panel (200) and the longitudinal beam rear section (120) form a force transmission closed-loop structure, the front vehicle body structure being **characterised in that** it further comprises a cowl cross beam (500), and the cowl cross beam (500) extends along the width direction of the vehicle body and is connected to the dash panel (200); the cowl cross beam (500) comprises a cross beam top plate (510), two cross beam bottom plates (520) and two cross beam vertical plates (530) used for separately being connected to the cross beam top plate (510) and the cross beam bottom plates (520); and the two cross beam bottom plates (520) are respectively connected to the dash panel (200) in a lap joint mode,
wherein the front vehicle body structure further comprises a middle channel (600) which protrudes upwards and extends along the front-back direction of the vehicle body, and the middle channel (600) is provided with a middle channel lap joint portion (610) which is separately connected to an upper panel face of the rear edge portion (210) and an upper floor face of the front floor (300) in a lap joint mode,
wherein the front vehicle body structure further comprises a first reinforcing piece (620) which is arranged on the middle channel (600) and connected to the middle channel (600), and the first reinforcing piece (620) is further provided with a first lap joint portion (621) which is connected to the dash panel (200) in a lap joint mode; the projection area of the first lap joint portion (621) projected on the dash panel (200) coincides with or partially coincides with the projection area of the cross beam bottom plate (520) projected on the dash panel (200).

2. The front vehicle body structure according to claim 1, wherein the cowl cross beam (500) is located on the front side of the dash panel (200), and the longitudinal beam front section (110) is further connected to the cowl cross beam (500).

3. The front vehicle body structure according to claim 1, wherein the front vehicle body structure further comprises a second reinforcing piece (700) used for connecting the longitudinal beam rear section (120) and the side longitudinal beam (400), and the second reinforcing piece (700) is located on the lower side of the rear edge portion and connected to the lower panel face of the rear edge portion.

4. The front vehicle body structure according to claim 3, wherein the second reinforcing piece (700) comprises a first sub-plate (710) extending along the front-back direction of the vehicle body and a second sub-plate (720) extending along the width direction of the vehicle body, the first sub-plate (710) is connected to the second sub-plate (720), and the first sub-plate (710) and the second sub-plate (720) are separately connected to the lower panel surface of the rear edge portion, and the second sub-plate (720) is used for connecting the longitudinal beam rear section (120) and the side longitudinal beam (400).

5. The front vehicle body structure according to claim 4, wherein the first sub-plate (710) is provided with a second lap joint portion (711) connected to the lower panel face of the rear edge portion in a lap joint mode, and the projection area, projected on the rear edge portion, of the middle channel lap joint portion (610) coincides with or partially coincides with the projection area, projected on the rear edge portion, of the second lap joint portion (711).

6. The front vehicle body structure according to claim 4, wherein the first sub-plate (710) is provided with a third lap joint portion (712) connected to the lower floor face of the front floor (300) in a lap joint mode, and the projection area, projected on the front floor (300), of the middle channel lap joint portion (610) coincides with or partially coincides with the projection area, projected on the front floor (300), of the third lap joint portion (712).

7. Vehicle, comprising the front vehicle body structure according to any one of claims 1-6.

## Patentansprüche

1. Vordere Fahrzeugkarosseriestruktur, umfassend einen vorderen Längsträger (100), ein Armaturenbrett (200), einen vorderen Boden (300) und einen mit dem vorderen Boden (300) verbundenen Seitenlängsträger (400); wobei,
das Armaturenbrett (200) dazu verwendet wird, einen Fahrzeugraum von einem Motorraum zu trennen, und das untere Ende des Armaturenbretts (200) mit einem hinteren Kantenabschnitt (210) versehen ist, der sich in Richtung des Hecks einer Fahrzeugkarosserie erstreckt und mit dem vorderen Boden (300) verbunden ist,
der vordere Längsträger (100) einen Längsträgervorderabschnitt (110) und einen Längsträgerhinterabschnitt (120) umfasst, der mit dem Längsträgervorderabschnitt (110) verbunden ist; der Längsträgervorderabschnitt (110) sich entlang einer Vorder-Hinter-Richtung der Fahrzeugkarosserie erstreckt, und der Längsträgervorderabschnitt (110) an der Vorderseite des Armaturenbretts (200) angeordnet und mit dem Armaturenbrett (200) verbunden ist; der Längsträgerhinterabschnitt (120) sich entlang der Vorder-Hinter-Richtung der Fahrzeugkarosserie erstreckt und sich zumindest bis zur Unterseite des hinteren Kantenabschnitts (210) erstreckt, und der Längsträgerhinterabschnitt (120) mit einer unteren Brettfläche des hinteren Kantenabschnitts (210) verbunden ist; und
der Seitenlängsträger (400) in Breitenrichtung der Fahrzeugkarosserie auf der Seite des vorderen Bodens (300) angeordnet ist und separat mit dem Armaturenbrett (200) und dem Längsträgerhinterabschnitt (120) verbunden ist, so dass der Seitenlängsträger (400), das Armaturenbrett (200) und der Längsträgerhinterabschnitt (120) eine geschlossene Kraftübertragungsschleife bilden, wobei die vordere Fahrzeugkarosseriestruktur **dadurch gekennzeichnet ist, dass** sie ferner einen Verkleidungsquerträger (500) umfasst, und der Verkleidungsquerträger (500) sich entlang der Breitenrichtung der Fahrzeugkarosserie erstreckt und mit dem Armaturenbrett (200) verbunden ist; der Verkleidungsquerträger (500) eine Querträgeroberplatte (510), zwei Querträgerbodenplatten (520) und zwei Querträgervertikalplatten (530) umfasst, die separat mit der Querträgeroberplatte (510) und den Querträgerbodenplatten (520) verbunden sind; und die beiden Querträgerbodenplatten (520) jeweils mit dem Armaturenbrett (200) in einem Überlappungsmodus verbunden sind,
wobei die vordere Fahrzeugkarosseriestruktur ferner einen Mittelkanal (600) umfasst, der nach oben vorsteht und sich entlang der Vorder-Hinter-Richtung der Fahrzeugkarosserie erstreckt, und der Mittelkanal (600) mit einem Mittelkanalüberlappungsverbindungsabschnitt (610) versehen ist, der separat mit einer oberen Brettfläche des hinteren Kantenabschnitts (210) und einer oberen Bodenfläche des vorderen Bodens (300) in einem Überlappungsverbindungsmodus verbunden ist,
wobei die vordere Fahrzeugkarosseriestruktur ferner ein erstes Verstärkungsteil (620) umfasst, das an dem Mittelkanal (600) angeordnet und mit dem Mittelkanal (600) verbunden ist, und das erste Verstärkungsteil (620) ferner mit einem ersten Überlappungsverbindungsabschnitt (621) versehen ist, der mit dem Armaturenbrett (200) in einem Überlappungsverbindungsmodus verbunden ist; wobei der Projektionsbereich des ersten Überlappungsverbindungsabschnitts (621), der auf das Armaturenbrett (200) projiziert wird, mit dem Projektionsbereich der Querträgerbodenplatte (520), die auf das Armaturenbrett (200) projiziert wird, zusammenfällt oder teilweise zusammenfällt.

2. Vordere Fahrzeugkarosseriestruktur nach Anspruch 1, wobei der Verkleidungsquerträger (500) an der Vorderseite des Armaturenbretts (200) angeordnet ist und der Längsträgervorderabschnitt (110) ferner mit dem Verkleidungsquerträger (500) verbunden ist.

3. Vordere Fahrzeugkarosseriestruktur nach Anspruch 1, wobei die vordere Fahrzeugkarosseriestruktur ferner ein zweites Verstärkungsteil (700) umfasst, das zum Verbinden des Längsträgerhinterabschnitts (120) und des Seitenlängsträgers (400) verwendet wird, und das zweite Verstärkungsteil (700) an der Unterseite des hinteren Kantenabschnitts angeordnet und mit der unteren Brettfläche des hinteren Kantenabschnitts verbunden ist.

4. Vordere Fahrzeugkarosseriestruktur nach Anspruch 3, wobei das zweite Verstärkungsteil (700) eine erste Teilplatte (710), die sich entlang der Vorder-Hinter-Richtung der Fahrzeugkarosserie erstreckt, und eine zweite Teilplatte (720), die sich entlang der Breitenrichtung der Fahrzeugkarosserie erstreckt, umfasst, die erste Teilplatte (710) mit der zweiten Teilplatte (720) verbunden ist, und die erste Teilplatte (710) und die zweite Teilplatte (720) separat mit der unteren Brettfläche des hinteren Kantenabschnitts verbunden sind, und die zweite Teilplatte (720) zum Verbinden des Längsträgerhinterabschnitts (120) und des Seitenlängsträgers (400) verwendet wird.

5. Vordere Fahrzeugkarosseriestruktur nach Anspruch 4, wobei die erste Teilplatte (710) mit einem zweiten Überlappungsverbindungsabschnitt (711) versehen ist, der mit der unteren Brettfläche des hinteren Kantenabschnitts in einem Überlappungsverbindungsmodus verbunden ist, und der auf den hinteren Kantenabschnitt projizierte Projektionsbereich des Mittelkanalüberlappungsverbindungsabschnitts (610) mit dem auf den hinteren Kantenabschnitt projizierten Projektionsbereich des zweiten Überlappungsverbindungsabschnitts (711) zusammenfällt oder teilweise zusammenfällt.

6. Vordere Fahrzeugkarosseriestruktur nach Anspruch 4, wobei die erste Teilplatte (710) mit einem dritten Überlappungsverbindungsabschnitt (712) versehen ist, der mit der unteren Bodenfläche des vorderen Bodens (300) in einem Überlappungsverbindungsmodus verbunden ist, und der auf den vorderen Boden (300) projizierte Projektionsbereich des Mittelkanalüberlappungsverbindungsabschnitts (610) mit dem auf den vorderen Boden (300) projizierten Projektionsbereich des dritten Überlappungsverbindungsabschnitts (712) zusammenfällt oder teilweise zusammenfällt.

7. Fahrzeug, umfassend die vordere Fahrzeugkarosseriestruktur nach einem der Ansprüche 1 bis 6.

## Revendications

1. Structure de carrosserie de véhicule avant, comprenant une poutrelle longitudinale avant (100), un tableau de bord (200), un plancher avant (300) et une poutrelle longitudinale latérale (400) qui est connectée au plancher avant (300) ; dans laquelle :
le tableau de bord (200) est utilisé pour séparer un habitacle de véhicule d'un compartiment moteur, et l'extrémité inférieure du tableau de bord (200) est munie d'une partie de bord arrière (210) qui est étendue en direction de l'arrière d'une carrosserie de véhicule et qui est connectée au plancher avant (300) ;
la poutrelle longitudinale avant (100) comprend une section avant de poutrelle longitudinale (110) et une section arrière de poutrelle longitudinale (120) qui est connectée à la section avant de poutrelle longitudinale (110) ; la section avant de poutrelle longitudinale (110) est étendue suivant une direction avant-arrière de la carrosserie de véhicule, et la section avant de poutrelle longitudinale (110) est agencée sur le côté avant du tableau de bord (200) et est connectée au tableau de bord (200) ; la section arrière de poutrelle longitudinale (120) est étendue suivant la direction avant-arrière de la carrosserie de véhicule et est étendue au moins jusqu'au côté inférieur de la partie de bord arrière (210), et la section arrière de poutrelle longitudinale (120) est connectée à une face inférieure de panneau de la partie de bord arrière (210) ; et
la poutrelle longitudinale latérale (400) est agencée sur le côté, dans la direction de largeur de la carrosserie de véhicule, du plancher avant (300) et est connectée de façon séparée au tableau de bord (200) et à la section arrière de poutrelle longitudinale (120), de telle sorte que la poutrelle longitudinale latérale (400), le tableau de bord (200) et la section arrière de poutrelle longitudinale (120) forment une structure en boucle fermée de transmission de force ;
la structure de carrosserie de véhicule avant étant **caractérisée en ce qu'**elle comprend en outre une poutrelle à fonction de traverse de capot (500), et la poutrelle à fonction de traverse de capot (500) est étendue suivant la direction de largeur de la carrosserie de véhicule et est connectée au tableau de bord (200) ; la poutrelle à fonction de traverse de capot (500) comprend une plaque de sommet de poutrelle à fonction de traverse (510), deux plaques de fond de poutrelle à fonction de traverse (520) et deux plaques verticales de poutrelle à fonction de traverse (530) qui sont utilisées pour être connectées de façon séparée à la plaque de sommet de poutrelle à fonction de traverse (510) et aux plaques de fond de poutrelle à fonction de traverse (520) ; et les deux plaques de fond de poutrelle à fonction de traverse (520) sont respectivement connectées au tableau de bord (200) selon un mode d'assemblage à recouvrement ;
dans laquelle la structure de carrosserie de véhicule avant comprend en outre un canal intermédiaire (600) qui fait saillie vers le haut et qui est étendu suivant la direction avant-arrière de la carrosserie de véhicule, et le canal intermédiaire (600) est muni d'une partie d'assemblage à recouvrement de canal intermédiaire (610) qui est connectée de façon séparée à une face supérieure de panneau de la partie de bord arrière (210) et à une face supérieure de plancher du plancher avant (300) selon un mode d'assemblage à recouvrement ; et
dans laquelle la structure de carrosserie de véhicule avant comprend en outre une première pièce de renforcement (620) qui est agencée sur le canal intermédiaire (600) et qui est connectée au canal intermédiaire (600), et la première pièce de renforcement (620) est en outre munie d'une première partie d'assemblage à recouvrement (621) qui est connectée au tableau de bord (200) selon un mode d'assemblage à recouvrement ; et l'aire de projection de la première partie d'assemblage à recouvrement (621) en projection sur le tableau de bord (200) coïncide ou coïncide partiellement avec l'aire de projection de la plaque de fond de poutrelle à fonction de traverse (520) en projection sur le tableau de bord (200).

2. Structure de carrosserie de véhicule avant selon la revendication 1, dans laquelle la poutrelle à fonction de traverse de capot (500) est située sur le côté avant du tableau de bord (200), et la section avant de poutrelle longitudinale (110) est en outre connectée à la poutrelle à fonction de traverse de capot (500).

3. Structure de carrosserie de véhicule avant selon la revendication 1, dans laquelle la structure de carrosserie de véhicule avant comprend en outre une seconde pièce de renforcement (700) qui est utilisée pour connecter la section arrière de poutrelle longitudinale (120) et la poutrelle longitudinale latérale (400), et la seconde pièce de renforcement (700) est située sur le côté inférieur de la partie de bord arrière et est connectée à la face inférieure de panneau de la partie de bord arrière.

4. Structure de carrosserie de véhicule avant selon la revendication 3, dans laquelle la seconde pièce de renforcement (700) comprend une première sous-plaque (710) qui est étendue suivant la direction avant-arrière de la carrosserie de véhicule et une seconde sous-plaque (720) qui est étendue suivant la direction de largeur de la carrosserie de véhicule, la première sous-plaque (710) est connectée à la seconde sous-plaque (720), et la première sous-plaque (710) et la seconde sous-plaque (720) sont connectées de façon séparée à la surface inférieure de panneau de la partie de bord arrière, et la seconde sous-plaque (720) est utilisée pour connecter la section arrière de poutrelle longitudinale (120) et la poutrelle longitudinale latérale (400).

5. Structure de carrosserie de véhicule avant selon la revendication 4, dans laquelle la première sous-plaque (710) est munie d'une deuxième partie d'assemblage à recouvrement (711) qui est connectée à la face inférieure de panneau de la partie de bord arrière selon un mode d'assemblage à recouvrement, et l'aire de projection, en projection sur la partie de bord arrière, de la partie d'assemblage à recouvrement de canal intermédiaire (610) coïncide ou coïncide partiellement avec l'aire de projection, en projection sur la partie de bord arrière, de la deuxième partie d'assemblage à recouvrement (711).

6. Structure de carrosserie de véhicule avant selon la revendication 4, dans laquelle la première sous-plaque (710) est munie d'une troisième partie d'assemblage à recouvrement (712) qui est connectée à la face inférieure de plancher du plancher avant (300) selon un mode d'assemblage à recouvrement, et l'aire de projection, en projection sur le plancher avant (300), de la partie d'assemblage à recouvrement de canal intermédiaire (610) coïncide ou coïncide partiellement avec l'aire de projection, en projection sur le plancher avant (300), de la troisième partie d'assemblage à recouvrement (712).

7. Véhicule comprenant la structure de carrosserie de véhicule avant selon l'une quelconque des revendications 1 à 6.
